# FASCICULE DE BREVET EUROPEEN

(11) **EP 4 490 476 B1**
(45) Date de publication et mention de la délivrance du brevet: **02.04.2025**
(21) Numéro de dépôt: 23837657.8
(22) Date de dépôt: 21.12.2023
(51) Int. Cl.: G01J 3/02, G01N 21/27, G01J 3/28, G01J 3/44

(54) **SYSTÈMES, DISPOSITIFS ET PROCÉDÉS DE CALCUL D'UN FACTEUR DE CORRECTION POUR CORRIGER UNE LIGNE DE BASE D'UN SPECTRE RAMAN GÉNÉRÉ PAR UNE TECHNOLOGIE DE SPECTROSCOPIE RAMAN AMPLIFIÉE PAR GUIDE D'ONDE**
SYSTEME, VORRICHTUNGEN UND VERFAHREN ZUR BERECHNUNG EINES KORREKTURFAKTORS ZUR KORREKTUR EINER BASISLINIE EINES RAMANSPEKTRUMS DURCH WELLENLEITERVERSTÄRKTE RAMANSPEKTROSKOPIETECHNOLOGIE
SYSTEMS, DEVICES AND METHODS FOR CALCULATING A CORRECTION FACTOR TO CORRECT A BASELINE OF A RAMAN SPECTRUM GENERATED BY WAVEGUIDE-ENHANCED RAMAN SPECTROSCOPY TECHNOLOGY

(30) Priorité: 14.03.2023 FR 2302333
(43) Date de publication de la demande: 15.01.2025
(73) Titulaire: INSPEK, 91120 Palaiseau (FR)
(72) Inventeur: MICHON, Jérôme, Palaiseau / 91120 (FR); BONNASSIES, Priscille, Palaiseau / 91120 (FR); LIEUTAUD, Christopher, Palaiseau / 91120 (FR); SANCHEZ, Dorian, Palaiseau / 91120 (FR)
(74) Mandataire: A.P.I. Conseil
(86) Numéro de dépôt international: PCT/EP2023/087454
(87) Numéro de publication internationale: WO 2024/188503

(56) Documents cités:
- KITA DEREK M. ET AL: "A packaged, fiber-coupled waveguide-enhanced Raman spectroscopic sensor", OPTICS EXPRESS, vol. 28, no. 10, 1 May 2020 (2020-05-01), pages 14963, XP093075528, DOI: 10.1364/OE.392486
- WANG PENGYI ET AL: "Waveguide-Enhanced Raman Spectroscopy (WERS): An Emerging Chip-Based Tool for Chemical and Biological Sensing", SENSORS, vol. 22, no. 23, 22 November 2022 (2022-11-22), pages 9058, XP093075612, DOI: 10.3390/s22239058
- ETTABIB MOHAMED A. ET AL: "Waveguide Enhanced Raman Spectroscopy for Biosensing: A Review", ACS SENSORS, vol. 6, no. 6, 11 June 2021 (2021-06-11), US, pages 2025 - 2045, XP093075619, ISSN: 2379-3694, DOI: 10.1021/acssensors.1c00366
- RAZA ALI ET AL: "High index contrast photonic platforms for on-chip Raman spectroscopy", vol. 27, no. 16, 29 July 2019 (2019-07-29), pages 23067, XP093080417, Retrieved from the Internet <URL:https://www.osapublishing.org/viewmedia.cfm?URI=oe-27-16-23067> DOI: 10.1364/OE.27.023067
- DEREK M KITA ET AL: "Are slot and sub-wavelength grating waveguides better than strip waveguides for sensing?", ARXIV.ORG, CORNELL UNIVERSITY LIBRARY, 201 OLIN LIBRARY CORNELL UNIVERSITY ITHACA, NY 14853, 9 May 2018 (2018-05-09), XP081178351, DOI: 10.1364/OPTICA.5.001046
- KITA DEREK M. ET AL: "Are slot and sub-wavelength grating waveguides better than strip waveguides for sensing?", vol. 5, no. 9, 23 August 2018 (2018-08-23), pages 1046, XP093080419, Retrieved from the Internet <URL:https://www.osapublishing.org/viewmedia.cfm?URI=optica-5-9-1046> DOI: 10.1364/OPTICA.5.001046
- STIEVATER TODD H ET AL: "Nanophotonic waveguides for chip-scale raman spectroscopy: Theoretical considerations", PROCEEDINGS OF SPIE; [PROCEEDINGS OF SPIE ISSN 0277-786X VOLUME 10524], SPIE, US, vol. 9824, 12 May 2016 (2016-05-12), pages 982404 - 982404, XP060068092, ISBN: 978-1-5106-1533-5, DOI: 10.1117/12.2227905

## Description

### Domaine technique

L'invention concerne le domaine du traitement de signaux Raman. En particulier, elle concerne un système, un dispositif semi-conducteur intégré et un procédé de calcul d'un facteur de correction pour corriger la ligne de base d'un spectre Raman généré par une technologie de spectroscopie Raman amplifiée par guide d'onde.

### Technique antérieure

Dans le cadre de la spectroscopie Raman, on sait que la performance de l'analyse spectrale d'un spectre Raman peut être fortement dégradée par des signaux indésirables, appelés « ligne de base » (également appelés « bruit de fond », « arrière-plan » en français ou « baseline » en anglais).

De manière connue, en spectroscopie Raman, on considère que la ligne de base est due soit à la diffusion Rayleigh, soit à la fluorescence de certaines molécules organiques (c.-à-d., l'émission de lumière à une certaine longueur d'onde par une substance irradiée à une autre longueur d'onde) qui provient des échantillons analysés.

À ce titre, on connaît de nombreuses méthodes de correction de la ligne de base de spectre Raman.

Toutefois, aucune d'entre elles ne prend en compte la spécificité de la ligne de base des spectres Raman acquis par des capteurs mettant en oeuvre la technologie de spectroscopie Raman amplifiée par guide d'onde (« Waveguide-Enhanced Raman Spectroscopy », WERS, en anglais).

En effet, avec cette technologie, par exemple, le matériau du guide d'onde, dans lequel se propage l'onde optique, produit également un effet Raman et contribue ainsi à la formation de la ligne de base.

Des exemples de l'état de la technique sont donnés dans les documents "A packaged, fiber-coupled waveguide-enhanced Raman spectroscopic sensor" de Kita Derek et al., Optics Express , 11.05.2020; "Waveguide-Enhanced Raman Spectroscopy (WERS): An Emerging Chip-Based Tool for Chemical and Biological Sensing" de Wang Pengyi et al., Sensors, 22.11.2022; "Waveguide Enhanced Raman Spectroscopy for Biosensing: A Review" de Ettabib et al., Sensors, American Chemical Society, 25.06.2021; "High index contrast photonic platforms for on-chip Raman spectroscopy" de Ali Raza et al., Optics Express, 05.08.2019; "Are slot and sub-wavelength grating waveguides better than strip waveguides for sensing?" de Kita et al., arXiv.org, 09.05.2018; "Are slot and sub-wavelength grating waveguides better than strip waveguides for sensing? Supplementary material" de Kita et al., Optica, 20.09.2018; et "Nanophotonic waveguides for chip-scale raman spectroscopy: Theoretical considerations" de Stievater Todd H. et al., Proceedings of SPIE, 12.05.2016.

Ainsi, il existe un besoin pour une méthode de correction de la ligne de base d'un spectre Raman qui prend en compte les particularités de la spectroscopie Raman amplifiée par guide d'onde.

### Résumé de l'invention

L'invention vise à résoudre, au moins partiellement, ce besoin.

Un premier aspect de l'invention concerne un système de calcul d'un facteur de correction pour corriger une ligne de base d'un spectre Raman acquis par au moins un dispositif de spectroscopie Raman amplifiée par guide d'onde, dit capteur Raman sur puce, tel que défini dans la revendication 1.

En pratique, le capteur Raman sur puce est conçu pour mettre en oeuvre une technologie de spectroscopie Raman amplifiée par guide d'onde et qui, en réponse à l'irradiation d'au moins un rayonnement d'excitation sur un milieu fluide continu à étudier, dit milieu analyte, présentant au moins un premier indice de réfraction, est configuré pour acquérir un premier spectre optique, dit premier spectre Raman, qui comprend une pluralité de longueurs d'onde discrètes et qui est représentatif du milieu analyte.

Par ailleurs, le système comprend également au moins une mémoire et au moins un processeur.

En outre, le capteur Raman sur puce comprend un substrat qui définit au moins une surface, et au moins un guide d'onde optique, qui est formé dans un matériau de transmission optique, qui est disposé en tout ou partie sur ou dans le substrat, et qui est configuré pour guider au moins un faisceau lumineux à au moins une longueur d'onde de travail.

Par ailleurs, la mémoire est configurée pour stocker une base de données dont chaque enregistrement est configuré pour associer un facteur de correction avec un milieu analyte, un milieu de référence prédéterminé, une longueur d'onde de travail, un premier indice de réfraction du milieu analyte et un deuxième indice de réfraction du milieu de référence prédéterminé.

En outre, la mémoire est également configurée pour stocker des instructions exécutables par processeur.

Les instructions exécutables par processeur implémentent, tout d'abord, une première étape de calcul, pour chaque longueur d'onde du premier spectre Raman, d'un premier paramètre, dit premier paramètre de rendement de conversion Raman, qui décrit le rendement de conversion Raman du capteur Raman sur puce dans le milieu de référence prédéterminé.

Ensuite, les instructions exécutables par processeur implémentent une deuxième étape de calcul, pour chaque longueur d'onde du premier spectre Raman, d'un deuxième paramètre, dit deuxième paramètre de rendement de conversion Raman, qui décrit le rendement de conversion Raman du capteur Raman sur puce dans le milieu analyte.

Enfin, les instructions exécutables par processeur implémentent une troisième étape de calcul, pour chaque longueur d'onde du premier spectre Raman, d'un facteur de correction qui correspond à un rapport entre le premier paramètre de rendement de conversion Raman et le deuxième paramètre de rendement de conversion Raman, le facteur de correction étant conçu pour corriger la ligne de base du deuxième spectre Raman.

En pratique, chaque facteur de correction est conçu pour corriger la ligne de base d'un deuxième spectre optique, dit deuxième spectre Raman, la ligne de base étant causée par le capteur Raman sur puce, lors de la génération du deuxième spectre Raman, en réponse à l'irradiation d'au moins un rayonnement d'excitation sur un milieu de référence prédéterminé qui présente au moins un deuxième indice de réfraction différent du premier indice de réfraction, le deuxième spectre Raman comprenant une pluralité de longueurs d'onde discrètes et étant représentatif du milieu de référence prédéterminé.

Enfin, chaque facteur de correction correspond, pour chaque longueur d'onde du premier spectre Raman, à un rapport entre le premier paramètre de rendement de conversion Raman et le deuxième paramètre de rendement de conversion Raman.

Dans un mode de réalisation du premier aspect de l'invention, les instructions exécutables par processeur implémentent, en outre, une étape de correction de la ligne de base du deuxième spectre Raman à partir du facteur de correction, de manière à obtenir un deuxième spectre Raman corrigé qui est représentatif de la ligne de base du premier spectre Raman, la ligne de base étant causée par le capteur Raman sur puce lors de l'acquisition du premier spectre Raman.

Enfin, les instructions exécutables par processeur implémentent également une étape de soustraction du deuxième spectre Raman corrigé du premier spectre Raman.

Un deuxième aspect de l'invention concerne un dispositif semi-conducteur intégré de calcul d'un facteur de correction pour corriger une ligne de base d'un spectre Raman qu'acquiert le dispositif semi-conducteur intégré, tel que défini dans la revendication 3.

En pratique, le dispositif semi-conducteur intégré est conçu pour mettre en œuvre une technologie de spectroscopie Raman amplifiée par guide d'onde, et est configuré pour, en réponse à l'irradiation d'au moins un rayonnement d'excitation sur un milieu fluide continu à étudier, dit milieu analyte, présentant au moins un premier indice de réfraction, acquérir un premier spectre optique, dit premier spectre Raman, qui comprend une pluralité de longueurs d'onde discrètes et qui est représentatif du milieu analyte.

En outre, le dispositif semi-conducteur intégré comprend un substrat qui définit au moins une surface, et au moins un guide d'onde optique qui est formé dans un matériau de transmission optique, qui est disposé en tout ou partie sur ou dans le substrat, et qui est configuré pour guider au moins un faisceau lumineux à au moins une longueur d'onde de travail.

Par ailleurs, le dispositif semi-conducteur intégré comprend également au moins un processeur et au moins une mémoire qui est configurée pour stocker une base de données dont chaque enregistrement est configuré pour associer un facteur de correction avec un milieu analyte, un milieu de référence prédéterminé, une longueur d'onde de travail, un premier indice de réfraction du milieu analyte et un deuxième indice de réfraction du milieu de référence prédéterminé.

En outre, la mémoire est également configurée pour stocker des instructions exécutables par processeur.

Les instructions exécutables par processeur implémentent, tout d'abord, une première étape de calcul, pour chaque longueur d'onde du premier spectre Raman, d'un premier paramètre, dit premier paramètre de rendement de conversion Raman, qui décrit le rendement de conversion Raman du dispositif semi-conducteur intégré dans le milieu de référence prédéterminé.

Ensuite, les instructions exécutables par processeur implémentent une deuxième étape de calcul, pour chaque longueur d'onde du premier spectre Raman, d'un deuxième paramètre, dit deuxième paramètre de rendement de conversion Raman, qui décrit le rendement de conversion Raman du dispositif semi-conducteur intégré dans le milieu analyte.

Enfin, les instructions exécutables par processeur implémentent une troisième étape de calcul, pour chaque longueur d'onde du premier spectre Raman, d'un facteur de correction qui correspond à un rapport entre le premier paramètre de rendement de conversion Raman et le deuxième paramètre de rendement de conversion Raman, le facteur de correction étant conçu pour corriger la ligne de base du deuxième spectre Raman.

En pratique, chaque facteur de correction est conçu pour corriger la ligne de base d'un deuxième spectre optique, dit deuxième spectre Raman, qui est causée par le dispositif semi-conducteur intégré, lors de la génération du deuxième spectre Raman, en réponse à l'irradiation d'au moins un rayonnement d'excitation sur un milieu de référence prédéterminé qui présente au moins un deuxième indice de réfraction différent du premier indice de réfraction, le deuxième spectre Raman comprenant une pluralité de longueurs d'onde discrètes et étant représentatif du milieu de référence prédéterminé.

Enfin, chaque facteur de correction correspond, pour chaque longueur d'onde du premier spectre Raman, à un rapport entre le premier paramètre de rendement de conversion Raman et le deuxième paramètre de rendement de conversion Raman.

Dans un mode de réalisation du deuxième aspect de l'invention, les instructions exécutables par processeur.

En pratique, les instructions exécutables par processeur implémentent, en outre, une étape de correction de la ligne de base du deuxième spectre Raman à partir du facteur de correction, de manière à obtenir un deuxième spectre Raman corrigé qui est représentatif de la ligne de base du premier spectre Raman, la ligne de base étant causée par le dispositif semi-conducteur intégré lors de l'acquisition du premier spectre Raman.

Enfin, les instructions exécutables par processeur implémentent également une étape de soustraction du deuxième spectre Raman corrigé du premier spectre Raman.

Un troisième aspect de l'invention concerne un procédé mis en œuvre par ordinateur de calcul d'un facteur de correction pour corriger une ligne de base d'un spectre Raman acquis par au moins un dispositif de spectroscopie Raman amplifiée par guide d'onde, dit capteur Raman sur puce, procédé tel que défini dans la revendication 5.

En pratique, le capteur Raman sur puce, qui est conçu pour mettre en œuvre une technologie de spectroscopie Raman amplifiée par guide d'onde et qui, en réponse à l'irradiation d'au moins un rayonnement d'excitation sur un milieu fluide continu à étudier, dit milieu analyte, présentant au moins un premier indice de réfraction, est configuré pour acquérir un premier spectre optique, dit premier spectre Raman, qui comprend une pluralité de longueurs d'onde discrètes et qui est représentatif du milieu analyte.

En particulier, le capteur Raman sur puce comprend un substrat qui définit au moins une surface, et au moins un guide d'onde optique qui est formé dans un matériau de transmission optique, qui est disposé en tout ou partie sur ou dans le substrat, et qui est configuré pour guider au moins un faisceau lumineux à au moins une longueur d'onde de travail.

En outre, le procédé comprend une étape d'acquisition d'un deuxième spectre deuxième spectre optique, dit deuxième spectre deuxième spectre Raman, par le capteur Raman sur puce, en réponse à l'irradiation d'au moins un rayonnement d'excitation sur un milieu de référence prédéterminé qui présente au moins un deuxième indice de réfraction différent du premier indice de réfraction, le deuxième spectre Raman comprenant une pluralité de longueurs d'onde discrètes et étant représentatif du milieu de référence prédéterminé, la génération deuxième spectre Raman causant la formation d'une ligne de base du deuxième spectre Raman.

Puis, le procédé comprend également une première étape de calcul, par un processeur, pour chaque longueur d'onde du premier spectre Raman, d'un premier paramètre, dit premier paramètre de rendement de conversion Raman, qui décrit le rendement de conversion Raman du capteur Raman sur puce dans le milieu de référence prédéterminé.

Ensuite, le procédé comprend aussi une deuxième étape de calcul, par un processeur, pour chaque longueur d'onde du premier spectre Raman, d'un deuxième paramètre, dit deuxième paramètre de rendement de conversion Raman, qui décrit le rendement de conversion Raman du capteur Raman sur puce dans le milieu analyte.

Enfin, le procédé comprend également une troisième étape de calcul, par un processeur, pour chaque longueur d'onde du premier spectre Raman, d'un facteur de correction qui correspond à un rapport entre le premier paramètre de rendement de conversion Raman et le deuxième paramètre de rendement de conversion Raman.

Dans un premier mode de réalisation du troisième aspect de l'invention, on réalise la première étape de calcul et la deuxième étape de calcul à partir d'une simulation optique d'au moins un mode optique du guide d'onde optique du capteur Raman sur puce.

Dans un deuxième mode de réalisation du troisième aspect de l'invention, la troisième étape de calcul comprend une division du premier paramètre de rendement de conversion Raman par le deuxième paramètre de rendement de conversion Raman.

Dans un troisième mode de réalisation du troisième aspect de l'invention, le procédé comprend en outre une étape de stockage, par un processeur, du facteur de correction dans une base de données dont chaque enregistrement est configuré pour associer un facteur de correction avec un milieu analyte, un milieu de référence prédéterminé, une longueur d'onde de travail, un premier indice de réfraction du milieu analyte et un deuxième indice de réfraction du milieu de référence prédéterminé.

Dans un quatrième mode de réalisation du troisième aspect de l'invention, le milieu de référence prédéterminé est un milieu fluide continu.

Dans un cinquième mode de réalisation du troisième aspect de l'invention, le milieu de référence prédéterminé est un milieu solide continu.

Dans un sixième mode de réalisation du troisième aspect, le procédé comprend, en outre, une étape de correction de la ligne de base du deuxième spectre Raman, par un processeur, à partir du facteur de correction, permettant ainsi d'obtenir un deuxième spectre Raman corrigé qui est représentatif de la ligne de base du premier spectre Raman, la ligne de base étant causée par le dispositif semi-conducteur intégré lors de l'acquisition du premier spectre Raman.

Enfin, le procédé comprend également une étape de soustraction, par un processeur, du deuxième spectre Raman corrigé du deuxième spectre Raman.

Dans une première mise en œuvre du sixième mode de réalisation du troisième aspect de l'invention, l'étape de correction de la ligne de base du deuxième spectre Raman comprend une multiplication du deuxième spectre Raman avec le facteur de correction associé à une longueur d'onde du premier spectre Raman.

Dans une deuxième mise en œuvre du sixième mode de réalisation du troisième aspect de l'invention, le procédé comprend en outre une étape de sélection, par un processeur, du facteur de correction dans une base de données en fonction, au moins, du milieu analyte, du milieu de référence prédéterminé, du premier indice de réfraction du milieu analyte, du deuxième indice de réfraction du milieu de référence prédéterminé et de la longueur d'onde de travail.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente des spectres Raman et leur ligne de base associée.
[Fig. 2] La figure 2 représente un système selon l'invention.
[Fig. 3] La figure 3 représente une vue du dessus d'un dispositif selon l'invention.
[Fig. 4] La figure 4 représente un procédé de calcul d'un facteur de correction selon l'invention.

Les figures ne respectent pas nécessairement les échelles, notamment en épaisseur, et ce, à des fins d'illustration.

### Description des modes de réalisation

Afin de ne pas obscurcir la description et détourner le lecteur de la compréhension des enseignements de l'invention, nos explications n'iront pas au-delà de ce qui est considéré comme nécessaire pour la compréhension et l'appréciation des concepts sous-jacents de l'invention. En effet, les modes de réalisation illustrés dans la description sont, pour la plupart, composés d'éléments connus de la personne du métier,

Le contexte dans lequel est mis en oeuvre l'invention est celui de la spectroscopie Raman amplifiée par guide d'onde (« Waveguide-Enhanced Raman Spectroscopy », WERS, en anglais).

En pratique, on utilise généralement les sondes de spectroscopie Raman dans les domaines de la détection biochimique, de la recherche ou de la production biochimique.

C'est le cas, par exemple, lorsque l'on souhaite analyser la composition chimique de mélanges liquides dans l'industrie.

Décrit simplement, la spectroscopie Raman consiste à éclairer une matière à analyser de façon à faire vibrer les liaisons moléculaires qui la compose. Ces vibrations se matérialisent par une émission photonique secondaire dont le déplacement en longueur d'onde par rapport à l'onde excitatrice, dit effet Raman, représente une signature caractéristique de chaque liaison, appelée spectre Raman.

Les spectres Raman ainsi obtenus sont finalement l'image propre de la (ou les) molécule(s) présente(s) dans le champ lumineux.

Ainsi, avec cette technologie, on peut identifier les molécules d'un échantillon, car chaque pic du spectre Raman est associé à un mode vibratoire d'une molécule (et également du mode rotationnel dans le cas des gaz).

Dit autrement, chaque fréquence vibrationnelle est spécifique au lien chimique et à la symétrie d'une molécule de sorte que les pics d'intensité d'un spectre Raman dévoilent une information qualitative et quantitative sur la nature de la dynamique moléculaire vibrationnelle d'un échantillon (p. ex., fréquence, symétrie des vibrations...).

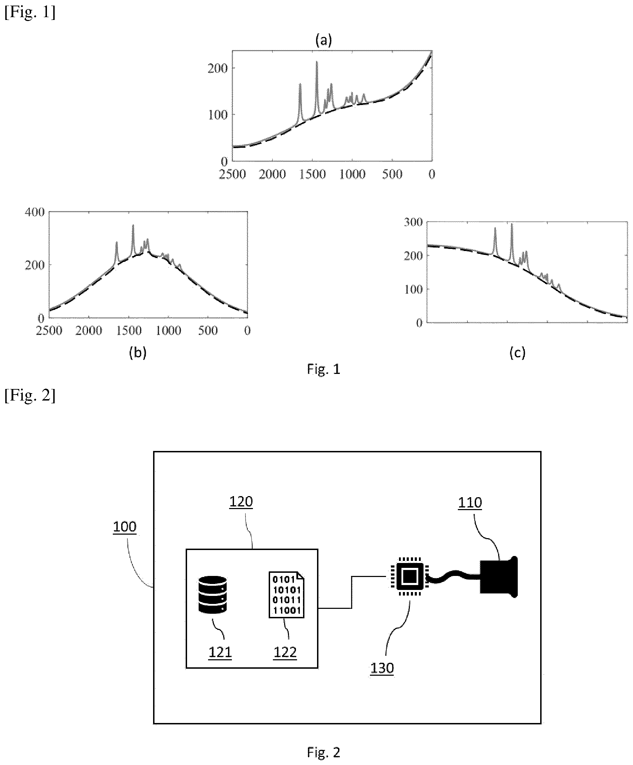

La figure 1 illustre trois exemples de spectres Raman, (a), (b) et (c).

Sur la figure 1, l'abscisse de ses spectres indique le déplacement Raman (« Raman shift », en anglais) qui correspond aux énergies de sauts entre les niveaux de vibration fondamentaux et qui est exprimé cm⁻¹ (nombre d'onde qui rappelle la proportionnalité directe entre l'énergie et l'inverse de la longueur d'onde d'un rayonnement électromagnétique).

Sur la figure 1, l'ordonnée de ces spectres correspond à l'intensité Raman diffusée (« Raman intensity », en anglais) pour chaque nombre d'onde.

Comme illustré sur la figure 1, les spectres (a), (b) et (c) comprennent chacun une ligne de base qui est illustrée en pointillés.

Dans le cadre de la spectroscopie Raman amplifiée par guide d'onde, les inventeurs ont identifié des phénomènes intrinsèques ou étrangers à l'expérience de spectroscopie et qui contribuent à la ligne de base.

En effet, dans la spectroscopie Raman amplifiée par guide d'onde, on guide un signal lumineux monochromatique du type laser dans un guide d'onde. Puis, le champ évanescent de la lumière guidée (c.-à-d., la partie de la lumière qui est physiquement présente en dehors du guide d'onde) excite les molécules de l'échantillon qui se trouvent aux alentours du guide d'onde. En réponse à cette excitation, ces molécules vont émettre un rayonnement Raman. Enfin, on collecte, dans le guide d'onde, une partie de ce rayonnement Raman, qui constitue alors un signal Raman d'intérêt.

Par conséquent, par exemple, le matériau du guide d'onde, dans lequel se propage le signal lumineux, produit également un effet Raman et contribue ainsi à la formation de la ligne de base.

C'est également le cas pour les autres éléments physiques qui constituent le dispositif mettant en œuvre la spectroscopie Raman amplifiée par guide d'onde.

Or, les méthodes connues de correction de la ligne de base d'un spectre Raman ne prennent pas en considération ces phénomènes qui sont spécifiques de la spectroscopie Raman amplifiée par guide d'onde.

En effet, dans une méthode connue dite de « calibration », on élimine la ligne de base d'un spectre Raman en utilisant une mesure de référence que l'on soustrait à la mesure réelle.

Mais cette méthode ne peut fonctionner que dans le cadre de la spectroscopie Raman traditionnelle, dans laquelle la contribution, à la ligne de base, du dispositif mettant en œuvre la spectroscopie Raman traditionnelle est constante, quel que soit le milieu analysé. Ce qui n'est pas le cas dans la spectroscopie Raman amplifiée par guide d'onde, dans laquelle la contribution, à la ligne de base, du dispositif mettant en œuvre la spectroscopie Raman amplifiée par guide d'onde varie en fonction de l'indice de réfraction du milieu analysé, puisque cela modifie le confinement du mode optique.

En outre, dans une méthode connue de traitement par algorithme, on élimine la ligne de base d'un spectre Raman en modélisant (p. ex. par régression) le signal associé à la ligne de base, directement sur la mesure réelle, avant de le soustraire à la mesure réelle.

Mais cette méthode présente deux inconvénients.

Tout d'abord, cette méthode nécessite de faire des hypothèses sur le signal associé à la mesure réelle, afin de pouvoir séparer la contribution de la ligne de celle de la mesure réelle des molécules recherchées.

Puis, dans cette méthode, on doit changer d'algorithme de traitement dès lors que le milieu analysé change, puisque dans ce cas, la ligne de base change également. Ainsi, un traitement par algorithme peut fonctionner dans certaines conditions, mais être inopérant dans d'autres conditions.

La solution de l'invention permet de résoudre les problèmes relevés dans l'art antérieur, grâce à la faculté de corriger la ligne de base d'un spectre Raman qui est causée par tout ou partie des éléments physiques qui constituent le dispositif mettant en œuvre la spectroscopie Raman amplifiée par guide d'onde.

Ensuite, on peut utiliser les méthodes connues de correction de la ligne de base avant de supprimer la ligne de base du spectre Raman acquis.

Avec la solution de l'invention, on peut améliorer le rapport signal sur bruit du signal Raman acquis, notamment avec une meilleure limite de détection que dans l'art antérieur.

### Premier aspect de l'invention : un système de calcul d'un facteur de correction pour corriger une ligne de base d'un spectre Raman

Comme illustré sur la figure 2, l'invention concerne un système 100 de correction d'une ligne de base d'un spectre Raman.

On entend par « système », un ensemble d'éléments qui sont reliés entre eux et qui exercent une influence les uns sur les autres.

En pratique, le système 100 comprend au moins un dispositif de spectroscopie Raman amplifiée par guide d'onde, dit capteur Raman sur puce 110, au moins une mémoire 120, et au moins un processeur 130.

Ainsi, le système 100 peut comprendre deux ou plus de deux premiers capteurs Raman sur puce 110, deux ou plus de deux mémoires 120 et/ou deux ou plus de deux processeurs 130.

Dans l'invention, le capteur Raman sur puce 110 est conçu pour mettre en œuvre une technologie de spectroscopie Raman amplifiée par guide d'onde, tel que présenté succinctement plus haut.

En pratique, en réponse à l'irradiation d'au moins un rayonnement d'excitation sur un milieu fluide continu à étudier, dit milieu analyte, le capteur Raman sur puce 110 est configuré pour acquérir un premier spectre optique, dit premier spectre Raman, qui est représentatif du milieu analyte.

Ainsi, le capteur Raman sur puce 110 peut acquérir le premier spectre Raman en réponse à l'irradiation de deux ou plus de deux rayonnements d'excitation sur le milieu analyte.

En pratique, le rayonnement d'excitation est un champ optique (également appelé champ électrique optique).

Dans l'invention, le milieu analyte présente au moins un premier indice de réfraction.

Ainsi, le milieu analyte peut comprendre deux ou plus de deux premiers indices de réfraction.

Dans un premier exemple, le milieu analyte comprend au moins un liquide.

Dans un deuxième exemple, le milieu analyte comprend au moins un gaz.

Par ailleurs, dans l'invention, le premier spectre Raman comprend une pluralité de longueurs d'onde discrètes.

De manière classique, le capteur Raman sur puce 110 comprend un substrat.

On entend par « substrat », un support entièrement semi-conducteur (p. ex. du silicium), un empilement de couches semi-conductrices, un support qui comprend des structures non homogènes, un support qui comprend des composants électroniques ou des parties de composants électroniques à des niveaux plus ou moins avancés de leur élaboration.

Par ailleurs, le capteur Raman sur puce 110 comprend au moins un guide d'onde optique (non représenté).

Ainsi, le capteur Raman sur puce 110 peut comprendre deux ou plus de deux guides d'onde optique.

On entend par « guide d'onde optique », un dispositif optique (p. ex. une fibre optique) qui possède des propriétés de piégeage de la lumière. En particulier, ses propriétés physiques lui permettent de guider et de concentrer de manière optimale un flux lumineux qui le traverse, dans le spectre visible ou non visible, vers un dispositif qui peut le collecter.

Dans un premier exemple, le guide d'onde optique est un guide d'onde optique monomode.

Dans un deuxième exemple, le guide d'onde optique est un guide d'onde optique multimode.

Dans l'invention, le substrat définit au moins une surface.

Ainsi, le substrat peut comprendre deux ou plus de deux surfaces.

Dans un premier exemple de la surface du substrat, celle-ci est sensiblement plane et généralement orientée horizontalement.

Dans un deuxième exemple de la surface du substrat, celle-ci est non plane et généralement orientée horizontalement.

Dans un troisième exemple de la surface du substrat, celle-ci est incurvée et généralement orientée verticalement.

Dans un quatrième exemple de la surface du substrat, celle-ci est généralement inclinée par rapport à l'horizontale.

Toutefois, selon les besoins, on pourra envisager d'autres formes de la surface du substrat, et ce, sans nécessiter de modifications substantielles de l'invention.

Par ailleurs, le guide d'onde optique est formé dans un matériau de transmission optique.

Dans un premier exemple de matériau du guide d'onde optique, celui-ci comporte du verre tel que du dioxyde de silicium (SiO2), des éléments chalcogènes, dit fibre de verre de chalcogénure (p. ex. le soufre, le sélénium ou le tellure).

Dans un deuxième exemple de matériau du guide d'onde optique, celui-ci comporte du plastique tel que des polymères transparents (p. ex. polyméthacrylate de méthyle (PMMA), le polystyrène (PS) et le polycarbonate (PC)).

Dans un troisième exemple de matériau du guide d'onde optique, celui-ci comporte des semiconducteurs à base de silicium (Si), du gallium arsenide (GaAs) et/ou du gallium nitride (GaN)

Toutefois, selon les besoins, on pourra envisager d'utiliser d'autres matériaux pour former le guide d'onde optique, et ce, sans nécessiter de modifications substantielles de l'invention.

En pratique, le guide d'onde optique est disposé en tout ou partie sur ou dans le substrat.

Dans une première mise en œuvre du guide d'onde optique, tout ou partie de celui-ci est disposé sur le substrat.

Dans une deuxième mise en œuvre du guide d'onde optique, tout ou partie de celui-ci est disposé dans le substrat.

Dans cette deuxième mise en œuvre du guide d'onde optique, une première portion du guide d'onde optique se trouve hors du substrat tandis qu'une deuxième portion du guide d'onde optique se trouve à l'intérieur du substrat.

Dans un premier exemple, le guide d'onde optique présente un ratio, entre les proportions de la première portion et de la deuxième portion, de 85/15.

Dans un deuxième exemple, le guide d'onde optique présente un ratio, entre les proportions de la première portion et de la deuxième portion, de 75/25.

Dans un troisième exemple, le guide d'onde optique présente un ratio, entre les proportions de la première portion et de la deuxième portion, de 50/50.

Toutefois, selon les besoins, on pourra envisager d'autres valeurs de ratio, entre les proportions de la première portion et de la deuxième portion, et ce, sans nécessiter de modifications substantielles de l'invention.

En outre, le guide d'onde optique est configuré pour guider, dans au moins un mode de propagation optique donné, au moins un faisceau lumineux à au moins une longueur d'onde de travail, le long d'au moins une direction de propagation de la lumière.

Ainsi, le guide d'onde optique peut guider dans au moins un mode de propagation optique donné, deux ou plus de deux faisceaux lumineux à deux ou plus de deux longueurs d'onde de travail, le long de deux ou plus de deux directions de propagation de la lumière.

Dans un premier exemple du guide d'onde optique, le faisceau lumineux est un faisceau laser émis dans le spectre visible.

Dans un deuxième exemple du guide d'onde optique, le faisceau lumineux est un faisceau laser émis dans le spectre non visible (p. ex. UV ou proche de l'infrarouge).

Dans l'invention, la mémoire 120 est de type connu (p. ex. un mémoire RAM, ROM ou EEPROM) et est configurée pour stocker une base de données 121 et, dans un mode de réalisation particulier, des instructions exécutables 122 par processeur.

Dans la base de données 121, chaque enregistrement est configuré pour associer un facteur de correction avec un milieu analyte, un milieu de référence prédéterminé, une longueur d'onde de travail, un premier indice de réfraction du milieu analyte et un deuxième indice de réfraction du milieu de référence prédéterminé.

Dans l'invention, chaque facteur de correction est conçu pour corriger la ligne de base d'un deuxième spectre optique, dit deuxième spectre Raman, qui est représentatif d'un milieu de référence prédéterminé.

En pratique, la ligne de base à corriger est causée par le capteur Raman sur puce 110 lors de la génération du deuxième spectre Raman, en réponse à l'irradiation d'au moins un rayonnement d'excitation sur le milieu de référence prédéterminé.

Ainsi, le milieu de référence prédéterminé peut comprendre deux ou plus de deux deuxièmes indices de réfraction.

Dans une mise en œuvre particulière, la ligne de base à corriger est causée par un capteur Raman sur puce qui est similaire ou identique au capteur Raman sur puce 110.

Dans l'invention, le milieu de référence prédéterminé présente au moins un deuxième indice de réfraction qui est différent du premier indice de réfraction.

Dans une première mise en œuvre du milieu de référence prédéterminé, celui-ci ne produit sensiblement aucune réponse Raman.

Dans un premier exemple, le milieu de référence prédéterminé est l'eau.

Dans un premier exemple, le milieu de référence prédéterminé est l'air.

Toutefois, selon les besoins, on pourra envisager d'utiliser d'autres milieux de référence prédéterminés, et ce, sans nécessiter de modifications substantielles de l'invention.

Dans une deuxième mise en œuvre du milieu de référence prédéterminé, celui-ci produit une réponse Raman connue.

Par ailleurs, le deuxième spectre Raman comprend une pluralité de longueurs d'onde discrètes.

Dans l'invention, un facteur de correction correspond, pour chaque longueur d'onde du premier spectre Raman, à un rapport entre, d'une part, un premier paramètre, dit premier paramètre de rendement de conversion Raman, qui décrit le rendement de conversion Raman du capteur Raman sur puce 110 dans le milieu de référence prédéterminé, et, d'autre part, un deuxième paramètre, dit deuxième paramètre de rendement de conversion Raman, qui décrit le rendement de conversion Raman du capteur Raman sur puce 110 dans le milieu analyte.

De manière connue, le rendement de conversion Raman (« Raman conversion efficiency », en anglais) est une mesure de la force du signal Raman qui est généré par un matériau donné.

On peut notamment trouver des formules de calcul du rendement de conversion Raman dans la littérature, par exemple, dans les articles suivants :
- équation (8) dans : Ali Raza, Stéphane Clemmen, Pieter Wuytens, Michiel de Goede, Amy S. K. Tong, Nicolas Le Thomas, Chengyu Liu, Jin Suntivich, Andre G. Skirtach, Sonia M. Garcia-Blanco, Daniel J. Blumenthal, James S. Wilkinson, and Roel Baets, 'High index contrast photonic platforms for on-chip Raman spectroscopy,' Opt. Express 27, 23067-23079 (2019),
- équation (S22) dans : Derek M. Kita, Jérôme Michon, Steven G. Johnson, and Juejun Hu, 'Are slot and sub-wavelength grating waveguides better than strip waveguides for sensing?,' Optica 5, 1046-1054 (2018),
- équation (13) in: Todd H. Stievater, Jacob B. Khurgin, Scott A. Holmstrom, Dmitry A. Kozak, Marcel W. Pruessner, William S. Rabinovich, R. Andrew McGill, 'Nanophotonic waveguides for chip-scale raman spectroscopy: Theoretical considerations,' Proc. SPIE 9824, Chemical, Biological, Radiological, Nuclear, and Explosives (CBRNE) Sensing XVII, 982404 (12 May 2016), and
- Paragraphe III.B dans : Y. Li, H. Zhao, A. Raza, S. Clemmen and R. Baets, 'Surface-Enhanced Raman Spectroscopy Based on Plasmonic Slot Waveguides With Free-Space Oblique Illumination," in IEEE Journal of Quantum Electronics, vol. 56, no. 1, pp. 1-8, Feb. 2020, Art no. 7200108, doi: 10.1109/JQE.2019.2946839.

En pratique, on définit le rendement de conversion Raman comme un rapport de l'intensité du signal Raman émis avec l'intensité de la lumière laser incidente.

Pour rappel, comme indiqué plus haut, le signal Raman est une lumière dispersée qui est émise lorsque la lumière laser incidente interagit avec les vibrations moléculaires dans le matériau.

En particulier, le rendement de conversion Raman dépend des propriétés du matériau ainsi que des paramètres de l'expérience, tels que la longueur d'onde du laser, la polarisation de la lumière et la température.

Dans une mise en œuvre particulière du facteur de correction, celui-ci correspond à une division du premier paramètre de rendement de conversion Raman par le deuxième paramètre de rendement de conversion Raman.

Par ailleurs, dans l'invention, les instructions exécutables 122 par processeur implémentent une étape de correction de la ligne de base du deuxième spectre Raman à partir d'au moins un facteur de correction, de manière à obtenir un deuxième spectre Raman corrigé qui est représentatif de la ligne de base du premier spectre Raman, la ligne de base étant causée par le capteur Raman sur puce 110 lors de l'acquisition du premier spectre Raman.

Ainsi, les instructions exécutables 122 par processeur peuvent implémenter une étape de correction de la ligne de base du deuxième spectre Raman à partir de deux ou plus de deux facteurs de correction.

Dans une mise en œuvre particulière de l'étape de correction de la ligne de base du deuxième spectre Raman, celle-ci comprend une multiplication du deuxième spectre Raman avec au moins un facteur de correction associé à une longueur d'onde du premier spectre Raman.

Ainsi, cette mise en œuvre particulière de l'étape de correction de la ligne de base du deuxième spectre Raman peut comprendre une multiplication du deuxième spectre Raman avec deux ou plus de deux facteurs de correction respectivement associés à une longueur d'onde du premier spectre Raman.

Par ailleurs, dans l'invention, les instructions exécutables 122 par processeur implémentent, en outre, une étape de soustraction connue du deuxième spectre Raman corrigé du premier spectre Raman.

Enfin, dans l'invention, le processeur 130 est de type connu (p. ex. une machine d'état, un microprocesseur ou un microcontrôleur) et est configuré pour exécuter les instructions exécutables 122.

Maintenant que nous avons décrit les caractéristiques du système 100, nous allons décrire un dispositif semi-conducteur intégré de calcul d'un facteur de correction pour corriger une ligne de base d'un spectre Raman.

### Deuxième aspect de l'invention : un dispositif semi-conducteur de calcul d'un facteur de correction pour corriger une ligne de base d'un spectre Raman qu'acquiert le dispositif semi-conducteur

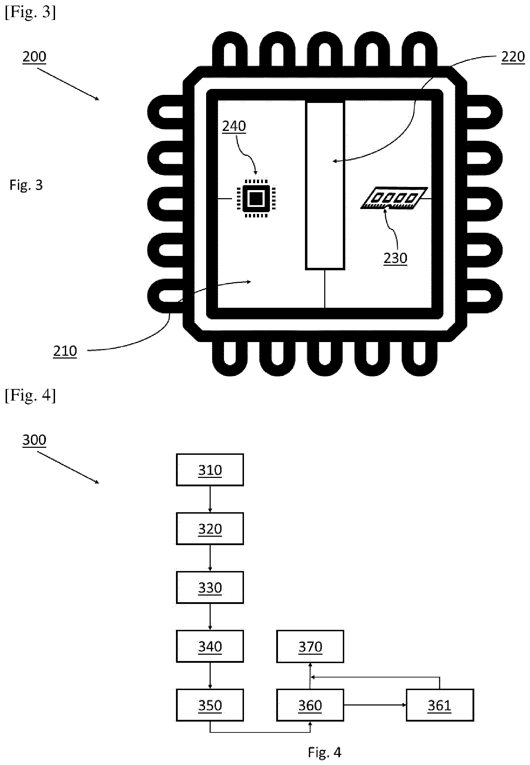

Comme illustré sur la figure 3, l'invention concerne également un dispositif semi-conducteur intégré 200 unique qui est conçu pour mettre en œuvre une technologie de spectroscopie Raman amplifiée par guide d'onde et qui intègre toutes les caractéristiques du système 100.

En particulier, le dispositif semi-conducteur intégré 200 est configuré pour, en réponse à l'irradiation d'au moins un rayonnement d'excitation sur un milieu fluide continu à étudier, dit milieu analyte, présentant au moins un premier indice de réfraction, acquérir un premier spectre optique, dit premier spectre Raman, qui comprend une pluralité de longueurs d'onde discrètes et qui est représentatif du milieu analyte.

En outre, le dispositif semi-conducteur intégré 200 comprend un substrat 210, au moins un guide d'onde optique 220, au moins une mémoire 230 et au moins un processeur 240, comme décrit plus haut.

En particulier, le substrat 210 définit au moins une surface.

Par ailleurs, le guide d'onde optique 220 est formé dans un matériau de transmission optique, qui est disposé en tout ou partie sur ou dans le substrat 210, et est configuré pour guider au moins un faisceau lumineux à au moins une longueur d'onde de travail.

La mémoire 230 est configurée pour stocker une base de données dont chaque enregistrement est configuré pour associer un facteur de correction avec un milieu analyte, un milieu de référence prédéterminé, une longueur d'onde de travail, un premier indice de réfraction du milieu analyte et un deuxième indice de réfraction du milieu de référence prédéterminé.

En pratique, chaque facteur de correction est conçu pour corriger la ligne de base d'un deuxième spectre optique, dit deuxième spectre Raman, qui est causée par le dispositif semi-conducteur intégré 200, lors de la génération du deuxième spectre Raman, en réponse à l'irradiation d'au moins un rayonnement d'excitation sur un milieu de référence prédéterminé qui présente au moins un deuxième indice de réfraction différent du premier indice de réfraction, le deuxième spectre Raman comprenant une pluralité de longueurs d'onde discrètes et étant représentatif du milieu de référence prédéterminé.

En outre, chaque facteur de correction correspond, pour chaque longueur d'onde du premier spectre Raman, à un rapport entre, d'une part, un premier paramètre, dit premier paramètre de rendement de conversion Raman, qui décrit le rendement de conversion Raman du dispositif semi-conducteur intégré 200 dans le milieu de référence prédéterminé, et, d'autre part, un deuxième paramètre, dit deuxième paramètre de rendement de conversion Raman, qui décrit le rendement de conversion Raman du dispositif semi-conducteur intégré 200 dans le milieu analyte.

Dans un mode de réalisation du dispositif semi-conducteur intégré 200, celui-ci comprend en outre au moins un processeur 240.

Par ailleurs, la mémoire 230 est en outre configurée pour stocker des instructions exécutables 232 par processeur qui implémentent une étape de correction de la ligne de base du deuxième spectre Raman à partir d'au moins un facteur de correction, de manière à obtenir un deuxième spectre Raman corrigé qui est représentatif de la ligne de base du premier spectre Raman, la ligne de base étant causée par le dispositif semi-conducteur intégré 200 lors de l'acquisition du premier spectre Raman.

En outre, les instructions exécutables 232 par processeur implémentent également une étape de soustraction du deuxième spectre Raman corrigé du premier spectre Raman.

Enfin, le processeur 240 est configuré pour exécuter les instructions exécutables 232.

Maintenant que nous avons décrit les caractéristiques du dispositif semi-conducteur intégré 200, nous allons décrire un procédé mis en œuvre par ordinateur de calcul d'un facteur de correction pour corriger une ligne de base d'un spectre Raman.

### Troisième aspect de l'invention : un procédé mis en œuvre par ordinateur de calcul d'un facteur de correction d'une ligne de base d'un spectre Raman

Comme illustré sur la figure 4, l'invention concerne également un procédé mis en œuvre par ordinateur de calcul 300 d'un facteur de correction pour corriger une ligne de base d'un spectre Raman, acquis par le capteur Raman sur puce 110, en réponse à l'irradiation d'au moins un rayonnement d'excitation sur un milieu analyte qui présente au moins un premier indice de réfraction.

En pratique, comme décrit plus haut dans le cadre du premier aspect de l'invention, le capteur Raman sur puce 110 est configuré pour acquérir un premier spectre optique, dit premier spectre Raman, qui comprend une pluralité de longueurs d'onde discrètes et qui est représentatif du milieu analyte.

Dans l'invention, le procédé mis en œuvre par ordinateur de calcul 300 d'un facteur de correction comprend une étape d'acquisition 310 d'un deuxième spectre Raman par le capteur Raman sur puce 110, en réponse à l'irradiation d'au moins un rayonnement d'excitation sur un milieu de référence prédéterminé qui présente au moins un deuxième indice de réfraction différent du premier indice de réfraction.

Dans une première mise en œuvre, le milieu de référence prédéterminé est un milieu fluide continu (p. ex. de l'eau, de l'air, de l'acétone, du méthanol, du chloroforme, du toluène ou du glycérol).

Dans une deuxième mise en œuvre, le milieu de référence prédéterminé est un milieu solide continu (p. ex. du graphite, du silicium, du corindon, du diamant ou du quartz).

Ensuite, le procédé mis en œuvre par ordinateur de calcul 300 d'un facteur de correction comprend, en outre, une première étape de calcul 320, par un processeur, pour chaque longueur d'onde du premier spectre Raman, d'un premier paramètre, dit premier paramètre de rendement de conversion Raman, qui décrit le rendement de conversion Raman du capteur Raman sur puce 110 dans le milieu de référence prédéterminé.

Puis, le procédé mis en œuvre par ordinateur de calcul 300 d'un facteur de correction comprend, en outre, une deuxième étape de calcul 330, par un processeur, pour chaque longueur d'onde du premier spectre Raman, d'un deuxième paramètre, dit deuxième paramètre de rendement de conversion Raman, qui décrit le rendement de conversion Raman du capteur Raman sur puce 110 dans le milieu analyte.

Dans une mise en œuvre du procédé mis en œuvre par ordinateur de calcul 300 d'un facteur de correction, on réalise la première étape de calcul 320 et la deuxième étape de calcul 330 à partir d'une simulation optique d'au moins un mode optique (p. ex. TE₀ ou TM₀) du guide d'onde optique du capteur Raman sur puce 110.

Ainsi, on peut réaliser la première étape de calcul 320 et la deuxième étape de calcul 330 à partir de deux ou plus de deux modes optiques du guide d'onde optique du capteur Raman sur puce 110.

Par exemple, on pourra utiliser un logiciel de simulation optique tel que Zemax^{®}, COMSOL Multiphysics^{®}, FRED^{®}, OpticStudio^{®} ou Lumerical^{®}.

En pratique, ces logiciels devront permettre de modéliser la géométrie et les matériaux du capteur Raman sur puce 110 (c.-à-d., l'ensemble des éléments qui le compose), du milieu analyte et du milieu de référence prédéterminé.

En outre, ces logiciels pourront permettre de faire varier indépendamment ou en association l'indice de réfraction du milieu analyte et du milieu de référence prédéterminé.

Enfin, le procédé mis en œuvre par ordinateur de calcul 300 d'un facteur de correction comprend une troisième étape de calcul 340, par un processeur, pour chaque longueur d'onde du premier spectre Raman, d'un facteur de correction qui correspond à un rapport entre le premier paramètre de rendement de conversion Raman et le deuxième paramètre de rendement de conversion Raman.

Dans une première mise en œuvre du procédé mis en œuvre par ordinateur de calcul 300 d'un facteur de correction, la troisième étape de calcul 340 comprend le calcul d'un nombre prédéterminé de facteurs de correction, le nombre prédéterminé étant inférieur au nombre total de longueurs d'onde du premier spectre Raman. Puis, la troisième étape de calcul 340 comprend l'interpolation des facteurs de correction manquants à partir de tout ou partie du nombre prédéterminé de facteurs de correction préalablement calculés.

Dans une deuxième mise en œuvre du procédé mis en œuvre par ordinateur de calcul 300 d'un facteur de correction, la troisième étape de calcul 340 comprend une division du premier paramètre de rendement de conversion Raman par le deuxième paramètre de rendement de conversion Raman.

Dans une mise en œuvre particulière du procédé mis en œuvre par ordinateur de calcul 300 d'un facteur de correction, celui-comprend en outre une étape de stockage 350 du facteur de correction dans la base de données 121, dont chaque enregistrement est configuré pour associer un facteur de correction avec un milieu analyte, un milieu de référence prédéterminé, une longueur d'onde de travail, un premier indice de réfraction et un deuxième indice de réfraction.

Dans une variation de la mise en œuvre particulière du procédé mis en œuvre par ordinateur de calcul 300 d'un facteur de correction, on peut remplir la base de données 121 en répétant l'ensemble des étapes du procédé tout en faisant varier indépendamment ou en association, les paramètres suivants : le milieu analyte, le milieu de référence prédéterminé, la longueur d'onde de travail, le premier indice de réfraction et le deuxième indice de réfraction.

Dans une version de la variation de la mise en œuvre particulière du procédé mis en œuvre par ordinateur de calcul 300 d'un facteur de correction, on peut compléter la base de données 121, les paramètres suivants : la polarisation et la géométrie du capteur Raman sur puce 110 (c.-à-d., l'ensemble des éléments qui le compose), du milieu analyte et du milieu de référence prédéterminé.

Dans une troisième mise en œuvre du procédé mis en œuvre par ordinateur de calcul 300 d'un facteur de correction, celui-ci comprend, en outre, une étape de correction 360 de la ligne de base du deuxième spectre Raman, par un processeur, à partir d'au moins un facteur de correction, de manière à obtenir un deuxième spectre Raman corrigé qui est représentatif de la ligne de base du premier spectre Raman, la ligne de base étant causée par le capteur Raman sur puce 110 lors de l'acquisition du premier spectre Raman.

Dans une mise en œuvre du procédé mis en œuvre par ordinateur de calcul 300 d'un facteur de correction, l'étape de correction 360 du deuxième spectre Raman comprend une multiplication du deuxième spectre Raman avec au moins un facteur de correction associé à une longueur d'onde du premier spectre Raman.

Dans une variation de la mise en œuvre particulière du procédé mis en œuvre par ordinateur de calcul 300 d'un facteur de correction, celui-ci comprend, en outre, une étape de sélection 361, par un processeur, du facteur de correction dans une base de données 121 en fonction, au moins, du milieu analyte, du milieu de référence prédéterminé, du premier indice de réfraction du milieu analyte, du deuxième indice de réfraction du milieu de référence prédéterminé et de la longueur d'onde de travail.

Enfin, le procédé mis en œuvre par ordinateur de calcul 300 d'un facteur de correction comprend une étape de soustraction 370 connue du deuxième spectre Raman corrigé du premier spectre Raman.

Nous avons décrit et illustré l'invention. Toutefois, l'invention ne se limite pas aux formes de réalisations que nous avons présentées. En effet, de nombreuses combinaisons des variantes, alternatives, modes de réalisation et mises en œuvre, peuvent être envisagées sans nécessiter de modifications substantielles de l'invention. Ainsi, un expert du domaine peut déduire d'autres variantes, alternatives, modes de réalisation et mises en œuvre, à la lecture de la description et des figures annexées et en fonction des contraintes économiques, ergonomiques, dimensionnelles à respecter.

L'invention peut faire l'objet de nombreuses variantes et applications autres que celles décrites ci-dessus. En particulier, sauf indication contraire, les différentes caractéristiques structurelles et fonctionnelles de chaque mise en œuvre particulière décrite ci-dessus ne doivent pas être considérées comme combinées et/ou étroitement et/ou inextricablement liées les unes aux autres, mais, au contraire, comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

Par ailleurs, dans l'invention, lorsqu'un élément est « conçu » pour remplir une fonction particulière, cela signifie que cet élément est créé spécifiquement dans le but de remplir cette fonction particulière.

Toutefois, selon les besoins et les ressources disponibles, on pourra envisager d'utiliser un élément existant, que l'on modifiera ou adaptera pour remplir cette fonction particulière, et ce, sans nécessiter de modifications substantielles de l'invention.

## Revendications

1. Système (100) de calcul d'un facteur de correction pour corriger une ligne de base d'un spectre Raman acquis par au moins un dispositif de spectroscopie Raman amplifiée par guide d'onde, dit capteur Raman sur puce (110), le système (100) comprenant,
- le capteur Raman sur puce (110), qui est conçu pour mettre en œuvre une technologie de spectroscopie Raman amplifiée par guide d'onde et qui, en réponse à l'irradiation d'au moins un rayonnement d'excitation sur un milieu fluide continu à étudier, dit milieu analyte, présentant au moins un premier indice de réfraction, est configuré pour acquérir un premier spectre optique, dit premier spectre Raman, qui comprend une pluralité de longueurs d'onde discrètes et qui est représentatif du milieu analyte, et
- au moins une mémoire (120), et
- au moins un processeur (130),
dans lequel,
- le capteur Raman sur puce (110) comprend,
- un substrat qui définit au moins une surface, et
- au moins un guide d'onde optique, qui est formé dans un matériau de transmission optique, qui est disposé en tout ou partie sur ou dans le substrat, et qui est configuré pour guider au moins un faisceau lumineux à au moins une longueur d'onde de travail,
- la mémoire (120) est configurée pour stocker,
- une base de données (121) dont chaque enregistrement est configuré pour associer un facteur de correction avec un milieu analyte, un milieu de référence prédéterminé, une longueur d'onde de travail, un premier indice de réfraction du milieu analyte et un deuxième indice de réfraction du milieu de référence prédéterminé,
- des instructions exécutables (122) par processeur qui implémentent,
- une première étape de calcul, pour chaque longueur d'onde du premier spectre Raman, d'un premier paramètre, dit premier paramètre de rendement de conversion Raman, qui décrit le rendement de conversion Raman du capteur Raman sur puce (110) dans le milieu de référence prédéterminé,
- une deuxième étape de calcul, pour chaque longueur d'onde du premier spectre Raman, d'un deuxième paramètre, dit deuxième paramètre de rendement de conversion Raman, qui décrit le rendement de conversion Raman du capteur Raman sur puce (110) dans le milieu analyte, et
- une troisième étape de calcul, pour chaque longueur d'onde du premier spectre Raman, d'un facteur de correction qui correspond à un rapport entre le premier paramètre de rendement de conversion Raman et le deuxième paramètre de rendement de conversion Raman, le facteur de correction étant conçu pour corriger la ligne de base du deuxième spectre Raman,
chaque facteur de correction,
- étant conçu pour corriger la ligne de base d'un deuxième spectre optique, dit deuxième spectre Raman, la ligne de base étant causée par le capteur Raman sur puce (110), lors de la génération du deuxième spectre Raman, en réponse à l'irradiation d'au moins un rayonnement d'excitation sur un milieu de référence prédéterminé qui présente au moins un deuxième indice de réfraction différent du premier indice de réfraction, le deuxième spectre Raman comprenant une pluralité de longueurs d'onde discrètes et étant représentatif du milieu de référence prédéterminé,
- correspondant, pour chaque longueur d'onde du premier spectre Raman, à un rapport entre le premier paramètre de rendement de conversion Raman et le deuxième paramètre de rendement de conversion Raman,
- le processeur (130) est configuré pour exécuter les exécuter les instructions exécutables (122).

2. Système (100) de calcul d'un facteur de correction selon la revendication 1, dans lequel, les instructions exécutables (122) par processeur implémentent en outre,
- une étape de correction de la ligne de base du deuxième spectre Raman à partir du facteur de correction, de manière à obtenir un deuxième spectre Raman corrigé qui est représentatif de la ligne de base du premier spectre Raman, la ligne de base étant causée par le capteur Raman sur puce (110) lors de l'acquisition du premier spectre Raman, et
- une étape de soustraction du deuxième spectre Raman corrigé du premier spectre Raman.

3. Système (100) de calcul d'un facteur de correction selon l'une quelconque des revendications 1 à 2, dans lequel le système est réalisé sous la forme d'un dispositif semi-conducteur intégré (200) comprenant,
- le capteur Raman sur puce (110) qui est intégré dans ledit dispositif semi-conducteur intégré (200),
- la mémoire (120) qui est réalisée sous la forme d'une mémoire intégrée (230), et
- le processeur (130) qui est réalisé sous la forme d'un processeur intégré (240).

4. Procédé mis en œuvre par ordinateur de calcul (300) d'un facteur de correction pour corriger une ligne de base d'un spectre Raman acquis par au moins un dispositif de spectroscopie Raman amplifiée par guide d'onde, dit capteur Raman sur puce (110), le capteur Raman sur puce (110) étant conçu pour mettre en œuvre une technologie de spectroscopie Raman amplifiée par guide d'onde et qui, en réponse à l'irradiation d'au moins un rayonnement d'excitation sur un milieu fluide continu à étudier, dit milieu analyte, présentant au moins un premier indice de réfraction, est configuré pour acquérir un premier spectre optique, dit premier spectre Raman, qui comprend une pluralité de longueurs d'onde discrètes et qui est représentatif du milieu analyte, le capteur Raman sur puce (110) comprenant,
- un substrat qui définit au moins une surface, et
- au moins un guide d'onde optique qui est formé dans un matériau de transmission optique, qui est disposé en tout ou partie sur ou dans le substrat, et qui est configuré pour guider au moins un faisceau lumineux à au moins une longueur d'onde de travail,
le procédé (300) comprenant,
- une étape d'acquisition (310) d'un deuxième spectre optique, dit deuxième spectre Raman, par le capteur Raman sur puce (110), en réponse à l'irradiation d'au moins un rayonnement d'excitation sur un milieu de référence prédéterminé qui présente au moins un deuxième indice de réfraction différent du premier indice de réfraction, le deuxième spectre Raman comprenant une pluralité de longueurs d'onde discrètes et étant représentatif du milieu de référence prédéterminé, la génération deuxième spectre Raman causant la formation d'une ligne de base du deuxième spectre Raman,
- une première étape de calcul (320), par un processeur, pour chaque longueur d'onde du premier spectre Raman, d'un premier paramètre, dit premier paramètre de rendement de conversion Raman, qui décrit le rendement de conversion Raman du capteur Raman sur puce (110) dans le milieu de référence prédéterminé,
- une deuxième étape de calcul (330), par un processeur, pour chaque longueur d'onde du premier spectre Raman, d'un deuxième paramètre, dit deuxième paramètre de rendement de conversion Raman, qui décrit le rendement de conversion Raman du capteur Raman sur puce (110) dans le milieu analyte, et
- une troisième étape de calcul (340), par un processeur, pour chaque longueur d'onde du premier spectre Raman, d'un facteur de correction qui correspond à un rapport entre le premier paramètre de rendement de conversion Raman et le deuxième paramètre de rendement de conversion Raman, le facteur de correction étant conçu pour corriger la ligne de base du deuxième spectre Raman.

5. Procédé mis en œuvre par ordinateur de calcul (300) d'un facteur de correction selon la revendication 4, dans lequel on réalise la première étape de calcul (320) et la deuxième étape de calcul (330) à partir d'une simulation optique d'au moins un mode optique du guide d'onde optique du capteur Raman sur puce (110).

6. Procédé mis en œuvre par ordinateur de calcul (300) d'un facteur de correction selon l'une quelconque des revendications 4 et 5, dans lequel la troisième étape de calcul (340) comprend une division du premier paramètre de rendement de conversion Raman par le deuxième paramètre de rendement de conversion Raman.

7. Procédé mis en œuvre par ordinateur de calcul (300) d'un facteur de correction selon l'une quelconque des revendications 4 à 6, comprenant en outre une étape de stockage (350), par un processeur, du facteur de correction dans une base de données (121) dont chaque enregistrement est configuré pour associer un facteur de correction avec un milieu analyte, un milieu de référence prédéterminé, une longueur d'onde de travail, un premier indice de réfraction du milieu analyte et un deuxième indice de réfraction du milieu de référence prédéterminé.

8. Procédé mis en œuvre par ordinateur de calcul (300) d'un facteur de correction selon l'une quelconque des revendications 4 à 7, dans lequel le milieu de référence prédéterminé est un milieu fluide continu.

9. Procédé mis en œuvre par ordinateur de calcul (300) d'un facteur de correction selon l'une quelconque des revendications 4 à 7, dans lequel le milieu de référence prédéterminé est un milieu solide continu.

10. Procédé mis en œuvre par ordinateur de calcul (300) d'un facteur de correction selon l'une quelconque des revendications 4 à 9, le procédé comprenant en outre,
- une étape de correction (360) de la ligne de base du deuxième spectre Raman, par un processeur, à partir du facteur de correction, permettant ainsi d'obtenir un deuxième spectre Raman corrigé qui est représentatif de la ligne de base du premier spectre Raman, la ligne de base étant causée par le capteur Raman sur puce (110) lors de l'acquisition du premier spectre Raman, et
- une étape de soustraction (370), par un processeur, du deuxième spectre Raman corrigé du premier spectre Raman.

11. Procédé mis en œuvre par ordinateur de calcul (300) d'un facteur de correction selon la revendication 10, dans lequel l'étape de correction (360) de la ligne de base du deuxième spectre Raman comprend une multiplication du deuxième spectre Raman avec le facteur de correction associé à une longueur d'onde du premier spectre Raman.

12. Procédé mis en œuvre par ordinateur de calcul (300) d'un facteur de correction selon l'une quelconque des revendications 10 à 11, comprenant en outre une étape de sélection (361), par un processeur, du facteur de correction dans une base de données (121) en fonction, au moins, du milieu analyte, du milieu de référence prédéterminé, du premier indice de réfraction du milieu analyte, du deuxième indice de réfraction du milieu de référence prédéterminé et de la longueur d'onde de travail.

## Patentansprüche

1. System (100) zur Berechnung eines Korrekturfaktors zur Korrektur einer Basislinie eines Raman-Spektrums, das von mindestens einer Raman-Spektroskopievorrichtung mit Wellenleiterverstärkung, bezeichnet als On-Chip-Raman-Sensor (110), erfasst wurde, wobei das System (100) umfasst:
- den On-Chip-Raman-Sensor (110), der ausgelegt ist, um eine wellenleiterverstärkte Raman-Spektroskopie-Technologie umzusetzen, und der als Reaktion auf die Bestrahlung mindestens einer Anregungsstrahlung auf ein zu untersuchendes kontinuierliches fluides Medium, bezeichnet als Analytmedium, das mindestens einen ersten Brechungsindex aufweist, ausgelegt ist, um ein erstes optisches Spektrum, bezeichnet als erstes Raman-Spektrum, zu erfassen, das eine Vielzahl diskreter Wellenlängen umfasst und für das Analytmedium repräsentativ ist, und
- mindestens einen Speicher (120), und
- mindestens einen Prozessor (130),
wobei
- der On-Chip-Raman-Sensor (110) umfasst,
- ein Substrat, das mindestens eine Oberfläche definiert, und
- mindestens einen optischen Wellenleiter, der aus einem optisch durchlässigen Material besteht, der ganz oder teilweise auf oder in dem Substrat angeordnet ist und der ausgelegt ist, um mindestens einen Lichtstrahl mit mindestens einer Arbeitswellenlänge zu führen,
- der Speicher (120) ausgelegt ist, um zu speichern,
- eine Datenbank (121), deren jede Eintragung ausgelegt ist, um einen Korrekturfaktor einem Analytmedium, einem vorbestimmten Referenzmedium, einer Arbeitswellenlänge, einem ersten Brechungsindex des Analytmediums und einem zweiten Brechungsindex des vorbestimmten Referenzmediums zuzuordnen,
- prozessorausführbare Anweisungen (122), die implementieren,
- einen ersten Berechnungsschritt für jede Wellenlänge des ersten Raman-Spektrums eines ersten Parameters, bezeichnet als erster Raman-Umwandlungswirkungsgrad-Parameter, der den Raman-Umwandlungswirkungsgrad des On-Chip-Raman-Sensors (110) in dem vorbestimmten Referenzmedium beschreibt,
- einen zweiten Berechnungsschritt für jede Wellenlänge des ersten Raman-Spektrums eines zweiten Parameters, bezeichnet als zweiter Raman-Umwandlungswirkungsgrad-Parameter, der den Raman-Umwandlungswirkungsgrad des On-Chip-Raman-Sensors (110) im Analytmedium beschreibt, und
- einen dritten Berechnungsschritt für jede Wellenlänge des ersten Raman-Spektrums eines Korrekturfaktors, der einem Verhältnis zwischen dem ersten Raman-Umwandlungswirkungsgrad-Parameter und dem zweiten Raman-Umwandlungswirkungsgrad-Parameter entspricht, wobei der Korrekturfaktor ausgelegt ist, um die Basislinie des zweiten Raman-Spektrums zu korrigieren,
wobei jeder Korrekturfaktor
- ausgelegt ist, um die Basislinie eines zweiten optischen Spektrums, bezeichnet als zweites Raman-Spektrum, zu korrigieren, wobei die Basislinie durch den On-Chip-Raman-Sensor (110) bei der Erzeugung des zweiten Raman-Spektrums als Reaktion auf die Bestrahlung mindestens einer Anregungsstrahlung auf ein vorbestimmtes Referenzmedium bewirkt wird, das mindestens einen zweiten Brechungsindex aufweist, der sich vom ersten Brechungsindex unterscheidet, wobei das zweite Raman-Spektrum eine Vielzahl diskreter Wellenlängen umfasst und für das vorbestimmte Referenzmedium repräsentativ ist,
- für jede Wellenlänge des ersten Raman-Spektrums einem Verhältnis zwischen einem ersten Raman-Umwandlungswirkungsgrad-Parameter und dem zweiten Raman-Umwandlungswirkungsgrad-Parameter entspricht,
- wobei der Prozessor (130) ausgelegt ist, um die ausführbaren Anweisungen (122) auszuführen.

2. System (100) zur Berechnung eines Korrekturfaktors nach Anspruch 1, wobei die prozessorausführbaren Anweisungen (122) ferner implementieren,
- einen Korrekturschritt der Basislinie des zweiten Raman-Spektrums anhand des Korrekturfaktors, um ein korrigiertes zweites Raman-Spektrum zu erhalten, das für die Basislinie des ersten Raman-Spektrums repräsentativ ist, wobei die Basislinie durch den On-Chip-Raman-Sensor (110) bei der Erfassung des ersten Raman-Spektrums bewirkt wird, und
- einen Subtraktionsschritt des korrigierten zweiten Raman-Spektrums vom ersten Raman-Spektrum.

3. System (100) zur Berechnung eines Korrekturfaktors nach einem der Ansprüche 1 bis 2, wobei das System in Form einer integrierten Halbleitervorrichtung (200) ausgeführt ist, umfassend,
- den On-Chip-Raman-Sensor (110), der in die integrierte Halbleitervorrichtung (200) integriert ist,
- den Speicher (120), der in Form eines integrierten Speichers (230) ausgeführt ist, und
- den Prozessor (130), der in Form eines integrierten Prozessors (240) ausgeführt ist.

4. Verfahren, das von einem Rechner umgesetzt wird, zum Berechnen (300) eines Korrekturfaktors zum Korrigieren einer Basislinie eines Raman-Spektrums, das von mindestens einer Raman-Spektroskopievorrichtung mit Wellenleiterverstärkung, bezeichnet als On-Chip-Raman-Sensor (110), erfasst wird, wobei der On-Chip-Raman-Sensor (110) ausgelegt ist, um eine wellenleiterverstärkte Raman-Spektroskopie-Technologie umzusetzen, und der als Reaktion auf die Bestrahlung mindestens einer Anregungsstrahlung auf ein zu untersuchendes kontinuierliches fluides Medium, bezeichnet als Analytmedium, das mindestens einen ersten Brechungsindex aufweist, ausgelegt ist, um ein erstes optisches Spektrum, bezeichnet als erstes Raman-Spektrum, zu erfassen, das eine Vielzahl diskreter Wellenlängen umfasst und das für das Analytmedium repräsentativ ist, wobei der On-Chip-Raman-Sensor (110) umfasst,
- ein Substrat, das mindestens eine Oberfläche definiert, und
- mindestens einen optischen Wellenleiter, der aus einem optisch durchlässigen Material besteht, der ganz oder teilweise auf oder in dem Substrat angeordnet ist und der ausgelegt ist, um mindestens einen Lichtstrahl mit mindestens einer Arbeitswellenlänge zu führen,
wobei das Verfahren (300) umfasst,
- einen Schritt der Erfassung (310) eines zweiten optischen Spektrums, bezeichnet als zweites Raman-Spektrum, durch den On-Chip-Raman-Sensor (110) als Reaktion auf die Bestrahlung mindestens einer Anregungsstrahlung auf ein vorbestimmtes Referenzmedium, das mindestens einen zweiten Brechungsindex aufweist, der sich vom ersten Brechungsindex unterscheidet, wobei das zweite Raman-Spektrum eine Vielzahl diskreter Wellenlängen umfasst und für das vorbestimmte Referenzmedium repräsentativ ist, wobei die Erzeugung des zweiten Raman-Spektrums die Bildung einer Basislinie des zweiten Raman-Spektrums bewirkt,
- einen ersten Berechnungsschritt (320) durch einen Prozessor für jede Wellenlänge des ersten Raman-Spektrums eines ersten Parameters, bezeichnet als erster Raman-Umwandlungswirkungsgrad-Parameter, der den Raman-Umwandlungswirkungsgrad des On-Chip-Raman-Sensors (110) im vorbestimmten Referenzmedium beschreibt,
- einen zweiten Berechnungsschritt (330) durch einen Prozessor für jede Wellenlänge des ersten Raman-Spektrums eines zweiten Parameters, bezeichnet als zweiter Raman-Umwandlungswirkungsgrad-Parameter, der den Raman-Umwandlungswirkungsgrad des On-Chip-Raman-Sensors (110) im Analytmedium beschreibt, und
- einen dritten Berechnungsschritt (340) durch einen Prozessor für jede Wellenlänge des ersten Raman-Spektrums eines Korrekturfaktors, der einem Verhältnis zwischen dem ersten Raman-Umwandlungswirkungsgrad-Parameter und dem zweiten Raman-Umwandlungswirkungsgrad-Parameter entspricht, wobei der Korrekturfaktor ausgelegt ist, um die Basislinie des zweiten Raman-Spektrums zu korrigieren.

5. Verfahren, das von einem Rechner umgesetzt wird, zum Berechnen (300) eines Korrekturfaktors nach Anspruch 4, wobei der erste Berechnungsschritt (320) und der zweite Berechnungsschritt (330) ausgehend von einer optischen Simulation mindestens eines optischen Modus des optischen Wellenleiters des On-Chip-Raman-Sensors (110) durchgeführt werden.

6. Verfahren, das von einem Rechner umgesetzt wird, zum Berechnen (300) eines Korrekturfaktors nach einem der Ansprüche 4 und 5, wobei der dritte Berechnungsschritt (340) eine Division des ersten Raman-Umwandlungswirkungsgrad-Parameters durch den zweiten Raman-Umwandlungswirkungsgrad-Parameter umfasst.

7. Verfahren, das von einem Rechner umgesetzt wird, zum Berechnen (300) eines Korrekturfaktors nach einem der Ansprüche 4 bis 6, das ferner einen Schritt des Speicherns (350) durch einen Prozessor des Korrekturfaktors in einer Datenbank (121) umfasst, deren jede Eintragung ausgelegt ist, um einen Korrekturfaktor einem Analytmedium, einem vorbestimmten Referenzmedium, einer Arbeitswellenlänge, einem ersten Brechungsindex des Analytmediums und einem zweiten Brechungsindex des vorbestimmten Referenzmediums zuzuordnen.

8. Verfahren, das von einem Rechner umgesetzt wird, zum Berechnen (300) eines Korrekturfaktors nach einem der Ansprüche 4 bis 7, wobei das vorbestimmte Referenzmedium ein kontinuierliches fluides Medium ist.

9. Verfahren, das von einem Rechner umgesetzt wird, zum Berechnen (300) eines Korrekturfaktors nach einem der Ansprüche 4 bis 7, wobei das vorbestimmte Referenzmedium ein kontinuierliches festes Medium ist.

10. Verfahren, das von einem Rechner umgesetzt wird, zum Berechnen (300) eines Korrekturfaktors nach einem der Ansprüche 4 bis 9, wobei das Verfahren ferner umfasst,
- einen Korrekturschritt (360) der Basislinie des zweiten Raman-Spektrums durch einen Prozessor anhand des Korrekturfaktors, der es so erlaubt, ein korrigiertes zweites Raman-Spektrum zu erhalten, das für die Basislinie des ersten Raman-Spektrums repräsentativ ist, wobei die Basislinie durch den On-Chip-Raman-Sensor (110) bei der Erfassung des ersten Raman-Spektrums bewirkt wird, und
- einen Subtraktionsschritt (370) durch einen Prozessor des korrigierten zweiten Raman-Spektrums vom ersten Raman-Spektrum.

11. Verfahren, das von einem Rechner umgesetzt wird, zum Berechnen (300) eines Korrekturfaktors nach Anspruch 10, wobei der Korrekturschritt (360) der Basislinie des zweiten Raman-Spektrums eine Multiplikation des zweiten Raman-Spektrums mit dem Korrekturfaktor umfasst, der einer Wellenlänge des ersten Raman-Spektrums zugeordnet ist.

12. Verfahren, das von einem Rechner umgesetzt wird, zum Berechnen (300) eines Korrekturfaktors nach einem der Ansprüche 10 bis 11, umfassend ferner einen Auswahlschritt (361) durch einen Prozessor des Korrekturfaktors in einer Datenbank (121) in Abhängigkeit mindestens vom Analytmedium, vom vorbestimmten Referenzmedium, vom ersten Brechungsindex des Analytmediums, vom zweiten Brechungsindex des vorbestimmten Referenzmediums und von der Arbeitswellenlänge.

## Claims

1. A system (100) for calculating a correction factor to correct a baseline of a Raman spectrum acquired by at least one waveguide-enhanced Raman spectroscopy device, referred to as an on-chip Raman sensor (110), the system (100) comprising,
- the on-chip Raman sensor (110), which is designed to implement a waveguide-enhanced Raman spectroscopy technique and which, in response to irradiation of at least one excitation radiation on a continuous fluid medium to be studied, referred to as an analyte medium, having at least one first refractive index, is configured to acquire a first optical spectrum, referred to as a first Raman spectrum, which comprises a plurality of discrete wavelengths and which is representative of the analyte medium, and
- at least one memory (120), and
- at least one processor (130), wherein,
- the on-chip Raman sensor (110) comprises,
- a substrate which defines at least one surface, and
- at least one optical waveguide, which is formed in an optical transmission material, which is all or in part disposed on or in the substrate, and which is configured to guide at least one light beam at at least one working wavelength,
- the memory (120) is configured to store,
- a database (121), each record of which is configured to associate a correction factor with an analyte medium, a predetermined reference medium, a working wavelength, a first refractive index of the analyte medium and a second refractive index of the predetermined reference medium,
- instructions (122) which are executable by processor which implement,
- a first calculation step, for each wavelength of the first Raman spectrum, of a first parameter, referred to as the first Raman conversion efficiency parameter, which describes the efficiency of Raman conversion for the on-chip Raman sensor (110) in the predetermined reference medium,
- a second calculation step, for each wavelength of the first Raman spectrum, of a second parameter, referred to as the second Raman conversion efficiency parameter, which describes the efficiency of Raman conversion for the on-chip Raman sensor (110) in the reference medium, and
- a third calculation step, for each wavelength of the first Raman spectrum, of a correction factor which corresponds to a ratio between the first Raman conversion efficiency parameter and the second Raman conversion efficiency parameter, the correction factor being designed to correct the baseline of the second Raman spectrum,
each correction factor,
- being designed to correct the baseline of a second optical spectrum, referred to as the second Raman spectrum, the baseline being caused by the on-chip Raman sensor (110), during the generation of the second Raman spectrum, in response to the irradiation of at least one excitation radiation on a predetermined reference medium which has at least one second refractive index different from the first refractive index, the second Raman spectrum comprising a plurality of discrete wavelengths and being representative of the predetermined reference medium,
- correspondingly, for each wavelength of the first Raman spectrum, at a ratio between the first Raman conversion efficiency parameter and the second Raman conversion efficiency parameter,
- the processor (130) is configured to execute the executable instructions (122).

2. The system (100) for calculating a correction factor according to claim 1, wherein, the computer-executable instructions (122) further implement,
- a step of correcting the baseline of the second Raman spectrum on the basis of the correction factor, so as to obtain a corrected second Raman spectrum which is representative of the baseline of the first Raman spectrum, the baseline being caused by the on-chip Raman sensor (110) during the acquisition of the first Raman spectrum, and
- a step of subtracting the corrected second Raman spectrum from the first Raman spectrum.

3. The system (100) for calculating a correction factor according to either of claims 1 or 2, wherein the system is produced in the form of an integrated semiconductor device (200) comprising,
- the on-chip Raman sensor (110) which is integrated in said integrated semiconductor device (200),
- the memory (120) which is produced in the form of an integrated memory (230), and
- the processor (130) which is produced in the form of an integrated processor (240).

4. A computer implemented method (300) for calculating a correction factor to correct a baseline of a Raman spectrum acquired by at least one waveguide-enhanced Raman spectroscopy device, referred to as an on-chip Raman sensor (110), the on-chip Raman sensor (110) being designed to implement a waveguide-enhanced Raman spectroscopy technology and which, in response to the irradiation of at least one excitation radiation on a continuous fluid medium to be studied, referred to as an analyte medium, having at least one first refractive index, is configured to acquire a first optical spectrum, referred to as a first Raman spectrum, which comprises a plurality of discrete wavelengths and which is representative of the analyte medium, the on-chip Raman sensor (110) comprising,
- a substrate which defines at least one surface, and
- at least one optical waveguide which is formed in an optical transmission material, which is all or in part disposed on or in the substrate, and which is configured to guide at least one light beam at at least one working wavelength,
the method (300) comprising,
- a step (310) of acquiring a second optical spectrum, referred to as the second Raman spectrum, by the on-chip Raman sensor (110), in response to the irradiation of at least one excitation radiation on a predetermined reference medium which has at least one second refractive index different from the first refractive index, the second Raman spectrum comprising a plurality of discrete wavelengths and being representative of the predetermined reference medium, the second-generation Raman spectrum causing the formation of a baseline of the second Raman spectrum,
- a first calculation step (320), by the processor, for each wavelength of the first Raman spectrum, of a first parameter, referred to as the first Raman conversion efficiency parameter, which describes the efficiency of Raman conversion for the on-chip Raman sensor (110) in the predetermined reference medium,
- a second calculation step (330), by the processor, for each wavelength of the first Raman spectrum, of a second parameter, referred to as the second Raman conversion efficiency parameter, which describes the efficiency of Raman conversion for the on-chip Raman sensor (110) in the reference medium, and
- a third calculation step (340), by the processor, for each wavelength of the first Raman spectrum, of a correction factor which corresponds to a ratio between the first Raman conversion efficiency parameter and the second Raman conversion efficiency parameter, the correction factor being designed to correct the baseline of the second Raman spectrum.

5. The computer-implemented method (300) for calculating a correction factor according to claim **4,** wherein the first calculation step (320) and the second calculation step (330) are carried out on the basis of an optical simulation of at least one optical mode of the optical waveguide of the on-chip Raman sensor (110).

6. A computer implemented method (300) for calculating a correction factor according to either of claims 4 or 5, wherein the third calculation step (340) comprises a division of the first Raman conversion efficiency parameter by the second Raman conversion efficiency parameter.

7. A computer implemented method (300) for calculating a correction factor according to any one of claims 4 to **6,** further comprising a step (350) of storing, by a processor, the correction factor in a database (121), each record of which is configured to associate a correction factor with an analyte medium, a predetermined reference medium, a working wavelength, a first refractive index of the analyte medium and a second refractive index of the predetermined reference medium.

8. A computer implemented method (300) for calculating a correction factor according to any one of claims 4 to 7, wherein the predetermined reference medium is a continuous fluid medium.

9. A computer implemented method (300) for calculating a correction factor according to any one of claims 4 to 7, wherein the predetermined reference medium is a continuous solid medium.

10. A computer implemented method (300) for calculating a correction factor according to any one of claims 4 to 9, the method further comprising,
- a step (360) of correcting the baseline of the second Raman spectrum, by a processor, on the basis of the correction factor, thus enabling a corrected second Raman spectrum to be obtained, which is representative of the baseline of the first Raman spectrum, the baseline being caused by the on-chip Raman sensor (110) during the acquisition of the first Raman spectrum, and
- a step of subtracting (370), by a processor, the corrected second Raman spectrum from the first Raman spectrum.

11. A computer implemented method (300) for calculating a correction factor according to claim 10, wherein the step (360) of correcting the baseline of the second Raman spectrum comprises a multiplication of the second Raman spectrum by the correction factor associated with a wavelength of the first Raman spectrum.

12. A computer implemented method (300) for calculating a correction factor according to any one of claims 10 to 11, further comprising a step (361) of selecting, by a processor, the correction factor in a database (121) as a function, at least, of the analyte medium, the predetermined reference medium, the first refractive index of the analyte medium, the second refractive index of the predetermined reference medium and the working wavelength.
